(19) Europäisches Patentamt
European Patent Office
Office européen des brevets

(11) EP 4 435 920 A1

(12) **EUROPEAN PATENT APPLICATION**
published in accordance with Art. 153(4) EPC

(43) Date of publication:
**25.09.2024 Bulletin 2024/39**

(21) Application number: **22894084.7**

(22) Date of filing: **21.01.2022**

(51) International Patent Classification (IPC):
***H01M 10/0567*** *(2010.01)*

(52) Cooperative Patent Classification (CPC):
Y02E 60/10

(86) International application number:
**PCT/CN2022/073094**

(87) International publication number:
**WO 2023/087536 (25.05.2023 Gazette 2023/21)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.11.2021 CN 202111380965**

(71) Applicant: **Jiujiang Tinci Advanced Materials Co., Ltd.**
**Jiujiang, Jiangxi 332500 (CN)**

(72) Inventors:
- **LIU, Niantao**
  **Jiujiang, Jiangxi 332500 (CN)**
- **FAN, Weizhen**
  **Jiujiang, Jiangxi 332500 (CN)**
- **XIN, Yong**
  **Jiujiang, Jiangxi 332500 (CN)**
- **ZHAO, Jingwei**
  **Jiujiang, Jiangxi 332500 (CN)**

(74) Representative: **Range, Christopher William**
**Withers & Rogers LLP**
**2 London Bridge**
**London SE1 9RA (GB)**

# (54) ELECTROLYTE SOLUTION ADDITIVE COMPOSITION, ELECTROLYTE SOLUTION AND LITHIUM SECONDARY BATTERY

(57) The present application relates to an electrolyte additive composition, an electrolyte, and a lithium secondary battery. The electrolyte additive composition includes a fluorine-containing pyridine compound having a structure represented by formula (I) and a phosphite compound having a structure represented by formula (II), where $R_1$, $R_2$, $R_3$, and $R_4$ are each independently selected from hydrogen, halogen, $C_1$ to $C_{20}$ alkyl, $C_1$ to $C_{20}$ halogenated alkyl, $C_6$ to $C_{26}$ aryl, $C_6$ to $C_{26}$ halogenated aryl, amino, isocyano, and alkoxy; and $R_5$, $R_6$, and $R_7$ are each independently selected from $C_1$ to $C_{20}$ alkyl , $C_1$ to $C_{20}$ halogenated alkyl, $C_6$ to $C_{26}$ aryl, and $C_6$ to $C_{26}$ halogenated aryl. A mass ratio of the fluorine-containing pyridine compound to the phosphite compound is (3 to 10): 1. The electrolyte additive composition can improve high-temperature battery performances and inhibit increase in acidity and chromaticity of the electrolyte.

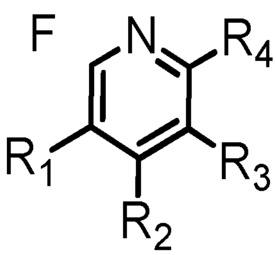
(I),
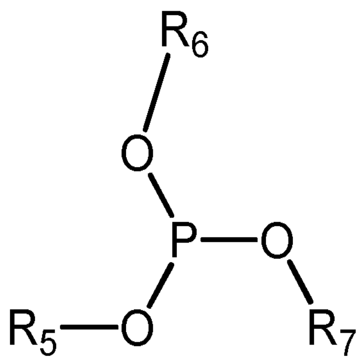
(II)

EP 4 435 920 A1

## Description

### FIELD

The present disclosure relates to the technical field of batteries, and more particularly, to an electrolyte additive composition, an electrolyte, and a lithium secondary battery.

### BACKGROUND

Compared with other secondary batteries, lithium secondary batteries have advantages such a high operating voltage, long cycle life, low self-discharge rate, environmental friendliness, and no memory effect. As available positive active materials for lithium secondary batteries, lithium transition metal oxides have broad application prospects. Among the lithium transition metal oxides, it is known that lithium cobalt oxide, lithium nickel oxide, and lithium manganese oxide exhibit high battery performance. Therefore, many research institutions and enterprises have conducted intensive research and development on these compounds for practical use. However, in order to allow the batteries to be suitable for practical use, there are various problems to be overcome even when using these materials.

Currently, problems required to be urgently solved include battery performance deterioration in high-temperature environments and instability of ethylene sulfate (DTD) in the electrolyte, which are described in detail as below.

(1) The battery performance deterioration of lithium secondary battery in high-temperature environments is caused by a variety of factors, for example, dissolution of metal ions from lithium transition metal oxides in high-temperature environments, decomposition of electrolyte, and rupture of a solid electrolyte interface (SEI) formed on a negative electrode, all of which can lead to a serious decline in the battery performance.

(2) DTD, as a commonly used low-resistance and high-performance functional electrolyte additive in the electrolyte, has become an indispensable substance in the electrolyte. However, the electrolyte containing DTD is prone to hydrolysis, causing increases in acidity and chromaticity of the electrolyte. As a result, DTD needs to be used under strict conditions, and low-temperature storage and refrigerated transportation are both costly. In addition, the increase in acidity may also cause damage to a positive electrode interface while leading to the dissolution of the transition metal ions. The transition metal ions may migrate to a negative electrode and thus destroy an interface film on a surface of the negative electrode, which may lead to electrochemical performance deterioration of battery and poor cycle performance particular at high temperatures.

At present, is has been reported that halogenated pyridine serves as a flame retardant additive of electrolyte in a lithium-ion battery. The safety of the battery is improved by flame retardant inhibition effect of halogen and nitrogen atoms on hydroxyl radicals. However, such a product, merely as a flame retardant, has no effects in terms of stability of DTD and also cannot prevent the electrode interface from being damaged by HF. Therefore, it is of great significance to develop a new electrolyte additive capable of improving high-temperature battery performances and inhibiting an increase in acidity and chromaticity of electrolyte.

### SUMMARY

Based on the above, the present disclosure provides an electrolyte additive composition, an electrolyte, and an energy storage device. The electrolyte additive composition can improve high-temperature battery performances and inhibit an increase in acidity and chromaticity of the electrolyte.

The technical solutions are described below.

An electrolyte additive composition includes a fluorine-containing pyridine compound having a structure represented by formula (I); and a phosphite compound having a structure represented by formula (II), where $R_1$, $R_2$, $R_3$, and $R_4$ are each independently selected from hydrogen, halogen, $C_1$ to $C_{20}$ alkyl, $C_1$ to $C_{20}$ halogenated alkyl, $C_6$ to $C_{26}$ aryl, $C_6$ to $C_{26}$ halogenated aryl, amino, isocyano, and alkoxy; and $R_5$, $R_6$, and $R_7$ are each independently selected from $C_1$ to $C_{20}$ alkyl , $C_1$ to $C_{20}$ halogenated alkyl, $C_6$ to $C_{26}$ aryl, and $C_6$ to $C_{26}$ halogenated aryl. A mass ratio of the fluorine-containing pyridine compound to the phosphite compound is (3 to 10): 1.

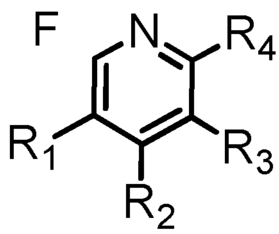 (I), 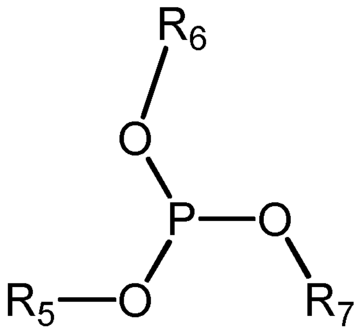 (II).

In an embodiment, $R_1$, $R_2$, $R_3$, and $R_4$ are each independently selected from hydrogen, halogen, $C_1$ to $C_{10}$ alkyl, $C_6$ to $C_{10}$ aryl, amino, isocyano, and $C_1$ to $C_{10}$ alkoxy.

In an embodiment, $R_1$, $R_2$, $R_3$, and $R_4$ are each independently selected from hydrogen, halogen, methyl, ethyl, 1-propyl, 2-propyl, 1-butyl, 2-butyl, 1-pentyl, 2-pentyl, 3-pentyl, 1-hexyl, 2-hexyl, 3-hexyl, octyl, phenyl, naphthyl, biphenyl, methoxy, and ethoxy.

In an embodiment, the fluorine-containing pyridine compound has a structure represented by any one of the following formulas (F 1) to (F9):

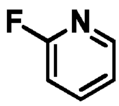 (F1), 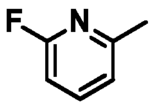 (F2), 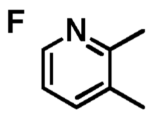 (F3), 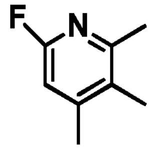 (F4),

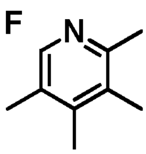 (F5), 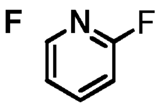 (F6), 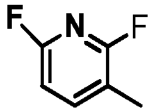 (F7), 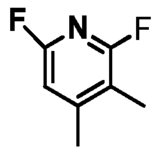 (F8), and 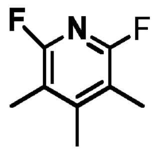 (F9).

In an embodiment, $R_5$, $R_6$, and $R_7$ are each independently selected from $C_1$ to $C_{10}$ alkyl, phenyl, naphthyl, and biphenyl.

In an embodiment, $R_5$, $R_6$, and $R_7$ are each independently selected from methyl, ethyl, 1-propyl, 2-propyl, 1-butyl, 2-butyl, 1-pentyl, 2-pentyl, 3-pentyl, 1-hexyl, 2-hexyl, 3-hexyl, octyl, phenyl, naphthyl, and biphenyl.

In an embodiment, the phosphite compound has a structure represented by any one of the following formulas (P1) to (P9):

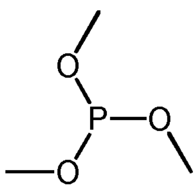 (P1), 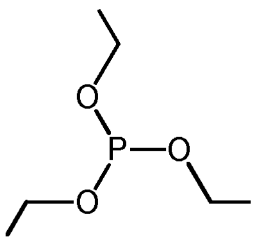 (P2), 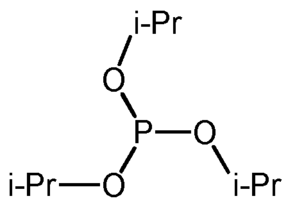 (P3),

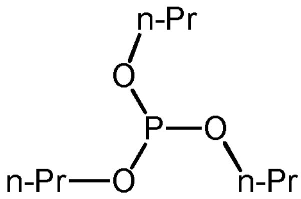 (P4), 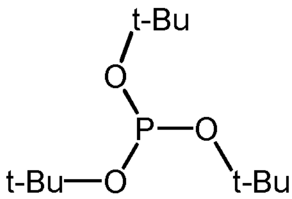 (P5), 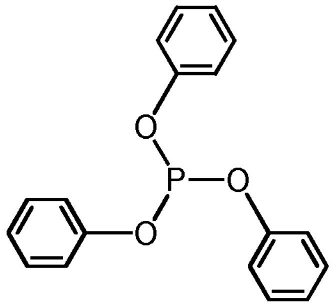 (P6),

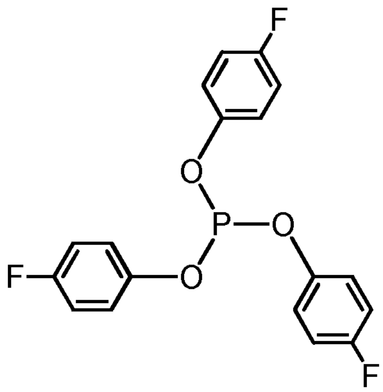 (P7), 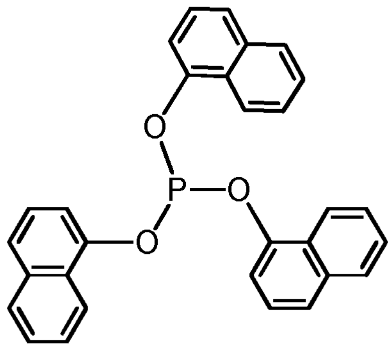 (P8),

and

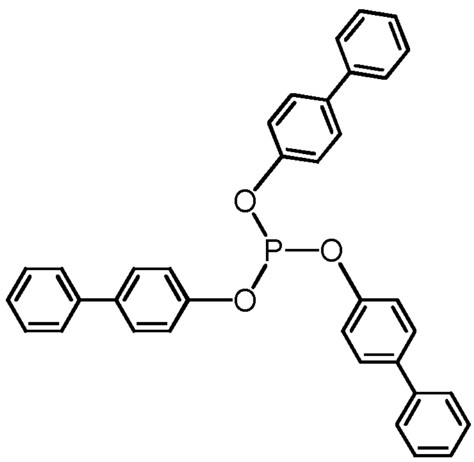 (P9).

The present disclosure further provides an electrolyte including the electrolyte additive composition as described above.

In an embodiment, the electrolyte further includes an electrolyte lithium salt, an organic solvent, and ethylene sulfate.

In an embodiment, the organic solvent is selected from a mixture of at least two selected from ethylene carbonate, propylene carbonate, diethyl carbonate, ethyl methyl carbonate, ethyl acetate, and propyl acetate; and the electrolyte lithium salt is selected from at least one of lithium hexafluorophosphate, lithium tetrafluoroborate, lithium bis(oxalate) borate, lithium difluorophosphate, lithium difluoro(oxalato) phosphate, and lithium bis(fluorosulfonyl)imide.

In an embodiment, a concentration of the electrolyte lithium salt in the organic solvent ranges from 0.8 mol/L to 1.5 mol/L; an addition amount of the electrolyte additive composition accounts for 0.05% to 1.5% of a total mass of the electrolyte; and an addition amount of the ethylene sulfate accounts for 0.5% to 3% of a total mass of the electrolyte.

In an embodiment, an addition amount of the fluorine-containing pyridine compound having the structure represented by formula (I) accounts for 0.03% to 1% of the total mass of the electrolyte; and an addition amount of the phosphite compound having the structure represented by formula (II) accounts for 0.01% to 0.1% of the total mass of

the electrolyte.

In an embodiment, the electrolyte further includes a functional additive selected from at least one of tris(trimethylsilyl)phosphate, tris(trimethylsilyl)borate, lithium difluoro(oxalato)borate, ethylene carbonate, vinyl ethylene carbonate, fluoroethylene carbonate, and 1,3-propane sultone; and/or an addition amount of the functional additive accounts for 0.5% to 5% of the total mass of the electrolyte.

The present disclosure further provides a lithium secondary battery including the electrolyte additive composition or electrolyte as described above.

In an embodiment, the lithium secondary battery includes a lithium-ion battery, a lithium-sulfur battery, or a lithium-air battery.

The present disclosure has the following beneficial effects.

The electrolyte additive composition according to the present disclosure includes the fluorine-containing pyridine compound having the structure represented by formula (I) and the phosphite compound having the structure represented by formula (II) at a specified mass ratio. Through a synergistic effect of the fluorine-containing pyridine compound and the phosphite compound, an increase in acidity and chromaticity of the electrolyte can be significantly inhibited. Particularly, for the electrolyte containing ethylene sulfate, the decomposition of ethylene sulfate can be significantly reduced and the increase in acidity and chromaticity of the electrolyte can be inhibited. Moreover, through the synergistic effect, a stable passivation film can be formed on a surface of an electrode to inhibit decomposition of the electrolyte and dissolution of transition metal ions, thereby improving cycle performance and high-temperature performance of a battery.

In addition, for electrolyte systems containing other unstable additives such as tris(trimethylsilyl)phosphate, tris(trimethylsilyl)borate, and lithium difluoro(oxalato)borate, the electrolyte additive composition according to the present disclosure can also effectively inhibit an increase in acidity and chromaticity of the electrolyte systems. Similarly, a stable passivation film can also be formed on a surface of an electrode to inhibit decomposition of the electrolyte and dissolution of transition metal ions, thereby improving cycle performance and high-temperature performance of a battery. Therefore, the electrolyte additive composition has broad application prospects.

## DETAILED DESCRIPTION

In order to facilitate understanding of the present disclosure, the present application is more comprehensively described below with preferred embodiments of the present disclosure. However, the present disclosure may be embodied in many different forms and should not be construed to be limited to the embodiments described herein. On the contrary, these embodiments are provided to enable a more thorough and comprehensive understanding of the present disclosure.

Unless otherwise defined, all technical and scientific terms used herein have the same meaning as commonly understood by those skilled in the art to which the present disclosure belongs. The terms used herein in the specification are for the purpose of describing specific embodiments only and are not intended to limit the present disclosure. The term "and/or" as used herein includes any and all combinations of one or more of the relevant listed items.

### Terms

Unless otherwise stated or contradictory, terms or phrases used herein have the following meanings.

The term "alkyl" refers to a saturated hydrocarbon containing a primary carbon atom, or a secondary carbon atom, or a tertiary carbon atom, or a quaternary carbon atom, or combinations thereof. The phrase containing this term such as "$C_{1-16}$ alkyl" refers to an alkyl containing 1 to 16 carbon atoms. Suitable examples include, but are not limited to, methyl (Me, $-CH_3$), ethyl (Et, $-CH_2CH_3$), 1-propyl (n-Pr, n-propyl, $-CH_2CH_2CH_3$), 2-propyl (i-Pr, i-propyl, $-CH(CH_3)_2$), 1-butyl (n-Bu, n-butyl, $-CH_2CH_2CH_2CH_3$), 2-methyl-1-propyl (i-Bu, i-butyl, $-CH_2CH(CH_3)_2$), 2-butyl (s-Bu, s-butyl, $-CH(CH_3)CH_2CH_3$), 2-methyl-2-propyl (t-Bu, t-butyl, $-C(CH_3)_3$), 1-pentyl (n-pentyl, $-CH_2CH_2CH_2CH_2CH_3$), 2-pentyl ($-CH(CH_3)CH_2CH_2CH_3$), 3-pentyl ($-CH(CH_2CH_3)_2$), 2-methyl-2-butyl ($-C(CH_3)_2CH_2CH_3$), 3-methyl-2-butyl ($-CH(CH_3)CH(CH_3)_2$), 3-methyl-1-butyl ($-CH_2CH_2CH(CH_3)_2$), 2-methyl-1-butyl ($-CH_2CH(CH_3)CH_2CH_3$), 1-hexyl ($-CH_2CH_2CH_2CH_2CH_2CH_3$), 2-hexyl ($-CH(CH_3)CH_2CH_2CH_2CH_3$), 3-hexyl ($-CH(CH_2CH_3)(CH_2CH_2CH_3)$), 2-methyl-2-pentyl ($-C(CH_3)_2CH_2CH_2CH_3$), 3-methyl-2-pentyl ($-CH(CH_3)CH(CH_3)CH_2CH_3$), 4-methyl-2-pentyl ($-CH(CH_3)CH_2CH(CH_3)_2$), 3-methyl-3-pentyl ($-C(CH_3)(CH_2CH_3)_2$), 2-methyl-3-pentyl ($-CH(CH_2CH_3)CH(CH_3)_2$), 2,3-dimethyl-2-butyl ($-C(CH_3)_2CH(CH_3)_2$), 3,3-dimethyl-2-butyl ($-CH(CH_3)C(CH_3)_3$, and octyl ($-(CH_2)_7CH_3$).

The term "alkoxy" refers to substitutes including -O-alkyl, i.e., the alkyl as defined above attached to a core moiety via an oxygen atom. Suitable examples include, but are not limited to, methoxy ($-O-CH_3$ or -OMe), ethoxy ($-O-CH_2CH_3$ or -OEt), and tert-butoxy ($-OC(CH_3)_3$ or -OtBu).

The term "aryl" refers to an aromatic hydrocarbon substitute derived from an aromatic compound by removing one hydrogen atom, and it can be a monocyclic aryl, a condensed-ring aryl, or a polycyclic aryl. For the polycyclic aryl, at least one ring is an aromatic ring system. For example, "$C_6$ to $C_{26}$ aryl" refers to aryl groups containing 6 to 26 carbon

atoms. Suitable examples include, but are not limited to: benzene, biphenyl, naphthalene, anthracene, and phenanthrene.

The term "halogen" or "halogen group" refers to F, Cl, Br, or I.

The present disclosure provides an electrolyte additive composition. The electrolyte additive composition includes a fluorine-containing pyridine compound having a structure represented by formula (I); and a phosphite compound having a structure represented by formula (II), where $R_1$, $R_2$, $R_3$, and $R_4$ are each independently selected from hydrogen, halogen, $C_1$ to $C_{20}$ alkyl, $C_1$ to $C_{20}$ halogenated alkyl, $C_6$ to $C_{26}$ aryl, $C_6$ to $C_{26}$ halogenated aryl, amino, isocyano, and alkoxy; and $R_5$, $R_6$, and $R_7$ are each independently selected from $C_1$ to $C_{20}$ alkyl, $C_1$ to $C_{20}$ halogenated alkyl, $C_6$ to $C_{26}$ aryl, and $C_6$ to $C_{26}$ halogenated aryl. Amass ratio of the fluorine-containing pyridine compound to the phosphite compound is (3 to 10): 1.

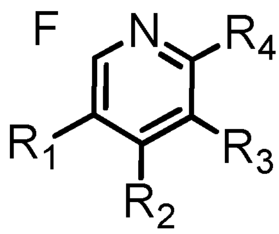 (I), 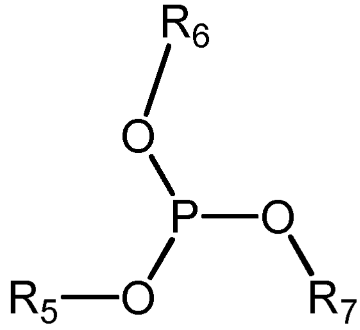 (II).

The electrolyte additive composition according to the present disclosure includes the fluorine-containing pyridine compound having the structure represented by formula (I) and the phosphite compound having the structure represented by formula (II) at a specified mass ratio. Through a synergistic effect of the fluorine-containing pyridine compound and the phosphite compound, an increase in acidity and chromaticity of the electrolyte can be significantly inhibited, and a stable passivation film can be formed on a surface of an electrode to inhibit decomposition of the electrolyte and dissolution of transition metal ions, thereby improving cycle performance and high-temperature performance of a battery.

In an embodiment, $R_1$, $R_2$, $R_3$, and $R_4$ are each independently selected from hydrogen, halogen, $C_1$ to $C_{10}$ alkyl, $C_6$ to $C_{10}$ aryl, amino, isocyano, and $C_1$ to $C_{10}$ alkoxy.

Further, $R_1$, $R_2$, $R_3$, and $R_4$ are each independently selected from hydrogen, halogen, methyl, ethyl, 1-propyl, 2-propyl, 1-butyl, 2-butyl, 1-pentyl, 2-pentyl, 3-pentyl, 1-hexyl, 2-hexyl, 3-hexyl, octyl, phenyl, naphthyl, biphenyl, methoxy, and ethoxy.

Further, the fluorine-containing pyridine compound has a structure represented by any one of the following formulas (F1) to (F9):

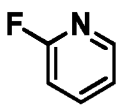 (F1), 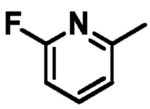 (F2), 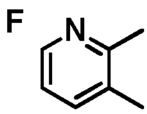 (F3), 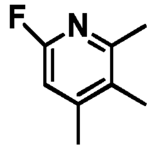 (F4), 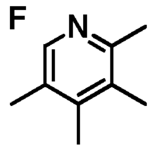 (F5),

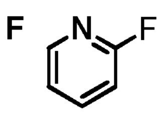 (F6), 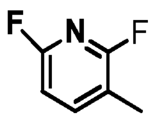 (F7), 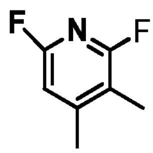 (F8), and 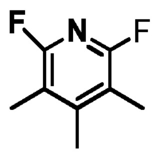 (F9).

In an embodiment, $R_5$, $R_6$, and $R_7$ are each independently selected from $C_1$ to $C_{10}$ alkyl, phenyl, naphthyl, and biphenyl.

Further, $R_5$, $R_6$, and $R_7$ are each independently selected from methyl, ethyl, 1-propyl, 2-propyl, 1-butyl, 2-butyl, 1-pentyl, 2-pentyl, 3-pentyl, 1-hexyl, 2-hexyl, 3-hexyl, octyl, phenyl, naphthyl, and biphenyl.

Further, the phosphite compound has a structure represented by any one of the following formulas (P1) to (P9):

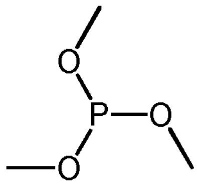 (P1), 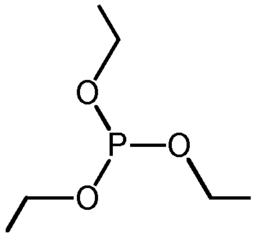 (P2), 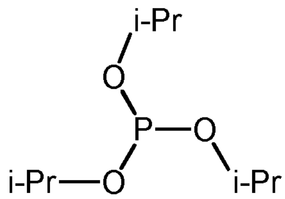 (P3),

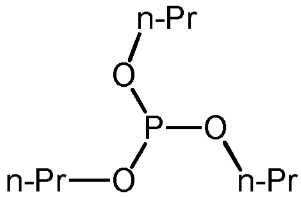 (P4), 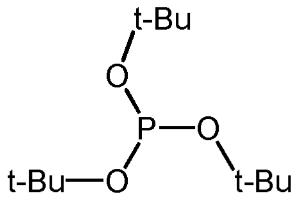 (P5), 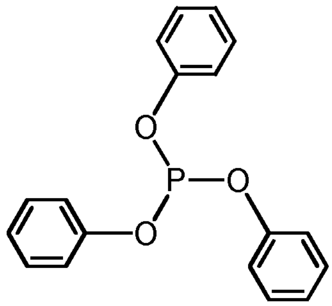 (P6),

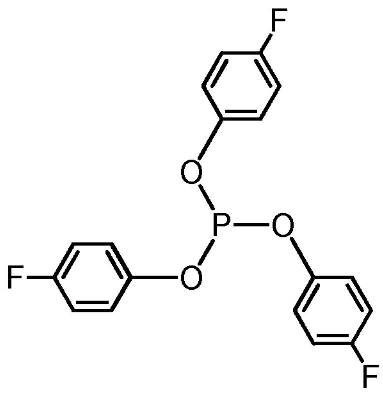 (P7), 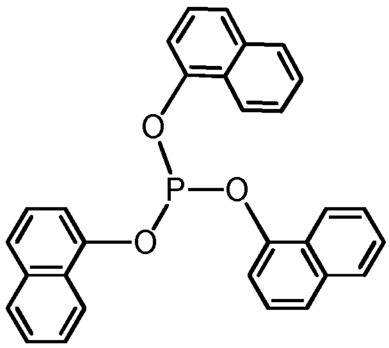 (P8),

and

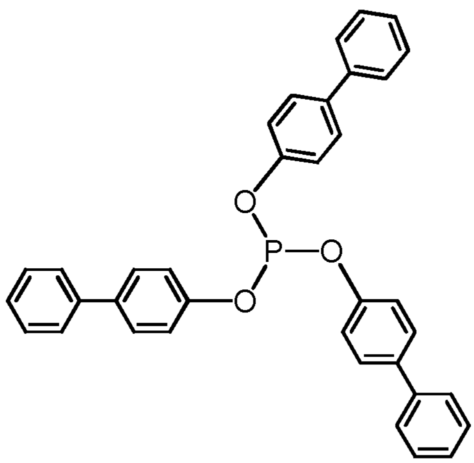 (P9).

The present disclosure further provides an electrolyte including the electrolyte additive composition as described above.

In an embodiment, the electrolyte further includes an electrolyte lithium salt, an organic solvent, and ethylene sulfate.

By adding the electrolyte additive composition according to the present disclosure into the electrolyte containing

ethylene sulfate, the decomposition of ethylene sulfate can be significantly reduced, and an increase in acidity and chromaticity of the electrolyte can be significantly inhibited. In addition, a stable passivation film can be formed on a surface of an electrode to inhibit decomposition of the electrolyte and dissolution of transition metal ions, thereby improving cycle performance and high-temperature performance of a battery.

In an embodiment, the organic solvent is selected from a mixture of at least two selected from ethylene carbonate, propylene carbonate, diethyl carbonate, ethyl methyl carbonate, ethyl acetate, and propyl acetate; and the electrolyte lithium salt is selected from at least one of lithium hexafluorophosphate, lithium tetrafluoroborate, lithium bis(oxalate) borate, lithium difluorophosphate, lithium difluoro(oxalato) phosphate, and lithium bis(fluorosulfonyl)imide.

In an embodiment, a concentration of the electrolyte lithium salt in the organic solvent ranges from 0.8 mol/L to 1.5 mol/L; an addition amount of the electrolyte additive composition accounts for 0.05% to 1.5% of a total mass of the electrolyte; and an addition amount of the ethylene sulfate accounts for 0.5% to 3% of the total mass of the electrolyte.

In an embodiment, an addition amount of the fluorine-containing pyridine compound having the structure represented by formula (I) accounts for 0.03% to 1% of the total mass of the electrolyte; and an addition amount of the phosphite compound having the structure represented by formula (II) accounts for 0.01% to 0.1% of the total mass of the electrolyte.

In an embodiment, the electrolyte further includes a functional additive selected from at least one of tris(trimethylsilyl)phosphate, tris(trimethylsilyl)borate, lithium difluoro(oxalato)borate, ethylene carbonate, vinyl ethylene carbonate, fluoroethylene carbonate, and 1,3-propane sultone; and/or an addition amount of the functional additive accounts for 0.5% to 5% of the total mass of the electrolyte.

The present disclosure further provides a preparation method of the above-mentioned electrolyte. The method includes a step of mixing and evenly stirring respective raw materials for preparing the electrolyte.

In an embodiment, the preparation method of the electrolyte includes the following steps: (1) purifying and removing impurities and water from the organic solvent; (2) adding the electrolyte lithium salt to the purified organic solvent obtained in step (1) at room temperature, and stirring evenly to prepare a mixture; and (3) adding the fluorine-containing pyridine compound having the structure represented by formula (I), the phosphite compound having the structure represented by formula (II), and ethylene sulfate (together with functional additives, if present) to the mixture obtained in step (2), and stirring evenly.

In an embodiment, said purifying and removing impurities and water in step (1) is preferably carried out by means of any one or more of molecular sieve, activated carbon, calcium hydride, lithium hydride, anhydrous calcium oxide, calcium chloride, phosphorus pentoxide, alkali metal, or alkaline earth metal.

The present disclosure further provides a lithium secondary battery including the electrolyte additive composition or electrolyte as described above.

In an embodiment, the lithium secondary battery includes a lithium-ion battery, a lithium-sulfur battery, or a lithium-air battery.

In an embodiment, the lithium-ion battery includes a positive electrode plate, a negative electrode plate, a separator, and said electrolyte containing the fluorine-containing pyridine compound, phosphite compound, and derivatives thereof. The positive electrode plate includes a positive active material with intercalated and deintercalated lithium ions, a conductive agent, a current collector, and a binder for bonding the positive active material and the conductive agent with the current collector. The negative electrode plate includes a negative active material with intercalated and deintercalated lithium ions, a conductive agent, a current collector, and a binder for bonding the negative active material and the conductive agent with the current collector.

In an embodiment, a positive electrode material of the lithium-ion battery includes one or more of $Li_{1+a}(Ni_xCo_yM_{1-x-y})O_2$, $Li(Ni_pMn_qCo_{2-p-q})O_4$, and $LiM_h(PO_4)_m$, where $0 \le a \le 0.3$, $0 \le x \le 1$, $0 \le y \le 1$, $0 < x+y \le 1$, $0 \le p \le 2$, $0 \le q \le 2$, $0 < p+q \le 2$, $0 < h < 5$, $0 < m < 5$, and M is Fe, Ni, Co, Mn, Al, or V.

In an embodiment, a negative electrode material of the lithium-ion battery includes at least one of lithium metal, lithium alloy, carbon, silicon-based negative electrode material, and tin-based negative electrode material.

The above-mentioned lithium-ion battery adopts the electrolyte including the fluorine-containing pyridine compound having the structure represented by formula (I) and the phosphite compound having the structure represented by formula (II), as mentioned above. Based on a compounding effect of the fluorine-containing pyridine compound and the phosphite compound, an increase in acidity and chromaticity of the electrolyte can be significantly inhibited, and a stable passivation film can be formed on a surface of an electrode to inhibit decomposition of the electrolyte and dissolution of transition metal ions, thereby improving cycle performance and high-temperature performance of the battery. The battery has good capacity retention rate when stored or used under high-temperature conditions.

Specific examples are set forth below to illustrate the present disclosure.

1. Investigation of high-temperature cycle performance and high-temperature storage performance of battery containing the electrolyte according to the present disclosure

**Example 1**

Example 1 provided an electrolyte additive composition, an electrolyte, and a lithium-ion battery.

(1) The electrolyte additive composition included

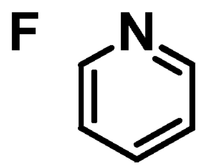

(F1) and

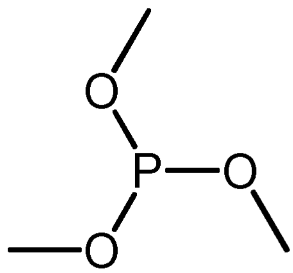

(P1) at a mass ratio of 10:1.

(2) The electrolyte and its preparation method are described as follows.

1) Ethylene carbonate (EC), ethyl methyl carbonate (EMC), and diethyl carbonate (DEC) were mixed according to a mass ratio of EC: EMC: DEC = 3:5:2, and the mixture was purified and impurities and water were removed using a molecular sieve.

2) Based on a total mass percentage of the electrolyte, 12.5 wt% of conductive lithium salt lithium hexafluorophosphate (about 1 mol/L, $LiPF_6$), 1 wt% of ethylene sulfate, 0.3 wt% of 2-fluoropyridine (F1), and 0.03 wt% of trimethyl phosphite (P1) were dissolved in the organic solvent obtained in step 1) at room temperature. Additionally, 1 wt% of ethylene carbonate and 1.5 wt% of 1,3-propane sultone were added as functional additives. The mixture was stirred evenly to obtain a basic electrolyte.

(3) The obtained electrolyte was used in soft-packed $LiNi_{0.8}Co_{0.1}Mn_{0.1}O_2$/graphite battery. Cycle performance of the soft-packed $LiNi_{0.8}Co_{0.1}Mn_{0.1}O_2$/graphite battery at a normal temperature environment was tested at 3.0V to 4.2V with a charge and discharge rate of 1C, and high-temperature storage performance at 60°C for 30 days of the soft-packed $LiNi_{0.8}Co_{0.1}Mn_{0.1}O_2$/graphite battery was tested.

**Example 2**

Example 2 differed from Example 1 in that the fluorine-containing pyridine compound added to the basic electrolyte prepared in step (2) was 2-fluoro-6-methylpyridine (F2) in an amount accounting for 0.3% of the total mass of the electrolyte.

**Example 3**

Example 3 differed from Example 1 in that the fluorine-containing pyridine compound added to the basic electrolyte prepared in step (2) was 6-fluoro-2,3-dimethylpyridine (F3) in an amount accounting for 0.3% of the total mass of the electrolyte.

**Example 4**

Example 4 differed from Example 1 in that the fluorine-containing pyridine compound added to the basic electrolyte prepared in step (2) was 6-fluoro-2,3,4-trimethylpyridine (F4) in an amount accounting for 0.3% of the total mass

of the electrolyte.

**Example 5**

Example 5 differed from Example 1 in that the fluorine-containing pyridine compound added to the basic electrolyte prepared in step (2) was 2-fluoro-3,4,5,6-tetramethylpyridine (F5) in an amount accounting for 0.3% of the total mass of the electrolyte.

**Example 6**

Example 6 differed from Example 1 in that the fluorine-containing pyridine compound added to the basic electrolyte prepared in step (2) was 2,6-difluoropyridine (F6) in an amount accounting for 0.3% of the total mass of the electrolyte.

**Example 7**

Example 7 differed from Example 1 in that the fluorine-containing pyridine compound added to the basic electrolyte prepared in step (2) was 2,6-difluoro-3-methylpyridine (F7) in an amount accounting for 0.3% of the total mass of the electrolyte.

**Example 8**

Example 8 differed from Example 1 in that the fluorine-containing pyridine compound added to the basic electrolyte prepared in step (2) was 2,6-difluoro-3,4-dimethylpyridine (F8) in an amount accounting for 0.3% of the total mass of the electrolyte.

**Example 9**

Example 9 differed from Example 1 in that the fluorine-containing pyridine compound added to the basic electrolyte prepared in step (2) was 2,6-difluoro-3,4,5-trimethylpyridine (F9) in an amount accounting for 0.3% of the total mass of the electrolyte.

**Example 10**

Example 10 differed from Example 1 in that the phosphite compound added to the basic electrolyte prepared in step (2) was triethyl phosphite (P2) in an amount accounting for 0.03% of the total mass of the electrolyte.

**Example 11**

Example 11 differed from Example 1 in that the phosphite compound added to the basic electrolyte prepared in step (2) was triphenyl phosphite (P6) in an amount accounting for 0.03% of the total mass of the electrolyte.

**Example 12**

Example 12 differed from Example 1 in that the fluorine-containing pyridine compound added to the basic electrolyte prepared in step (2) was 2-fluoro-6-methylpyridine (F2) in an amount accounting for 0.15% of the total mass of the electrolyte, and that the phosphite compound added to the basic electrolyte prepared in step (2) was triethyl phosphite (P2) in an amount accounting for 0.03% of the total mass of the electrolyte.

**Comparative Example 1**

Comparative Example 1 differed from Example 1 in that the basic electrolyte prepared in step (2) did not include the fluorine-containing pyridine compound having the structure represented by formula (I) and the phosphite compound having the structure represented by formula (II) according to the present disclosure.

**Comparative Example 2**

Comparative Example 2 differed from Example 1 in that the phosphite compound P1 in Example 1 was replaced

with tris(trimethylsilyl)phosphite

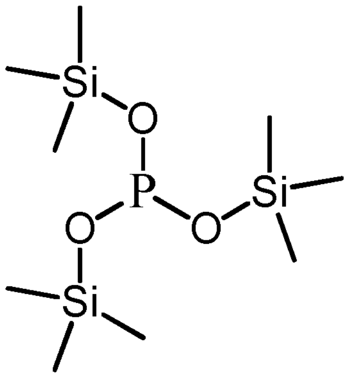

.

**Comparative Example 3**

Comparative Example 3 differed from Example 1 in that the addition of the phosphite compound P1 in Example 1 was omitted, and that an addition amount of the 2-fluoropyridine (F 1) in the electrolyte accounted for 0.33% of the total mass of the electrolyte.

**Comparative Example 4**

Comparative Example 4 differed from Example 1 in that the addition of the phosphite compound P1 in Example 2 was omitted, and that an addition amount of the fluorine-containing pyridine compound F2 in the electrolyte accounted for 0.33% of the total mass of the electrolyte.

**Comparative Example 5**

Comparative Example 5 differed from Example 1 in that the addition of the phosphite compound P1 in Example 1 was omitted, and that an addition amount of the fluorine-containing pyridine compound F3 in the electrolyte accounted for 0.33% of the total mass of the electrolyte.

**Comparative Example 6**

Comparative Example 6 differed from Example 1 in that the addition of the phosphite compound P1 in Example 1 was omitted, that the addition amount of the fluorine-containing pyridine compound F4 in the electrolyte accounted for 0.33% of the total mass of the electrolyte.

**Comparative Example 7**

Comparative Example 7 differed from Example 1 in that the addition of the phosphite compound P1 in Example 1 was omitted, that the addition amount of the fluorine-containing pyridine compound F5 in the electrolyte accounted for 0.33% of the total mass of the electrolyte.

**Comparative Example 8**

Comparative Example 8 differed from Example 1 in that the addition of the phosphite compound P1 in Example 1 was omitted, that the addition amount of the fluorine-containing pyridine compound F6 in the electrolyte accounted for 0.33% of the total mass of the electrolyte.

**Comparative Example 9**

Comparative Example 9 differed from Example 1 in that the addition of the phosphite compound P1 in Example 1 was omitted, that the addition amount of the fluorine-containing pyridine compound F7 in the electrolyte accounted for 0.33% of the total mass of the electrolyte.

**Comparative Example 10**

Comparative Example 10 differed from Example 1 in that the addition of the phosphite compound P1 in Example 1 was omitted, that the addition amount of the fluorine-containing pyridine compound F8 in the electrolyte accounted for 0.33% of the total mass of the electrolyte.

**Comparative Example 11**

Comparative Example 11 differed from Example 1 in that the addition of the phosphite compound P1 in Example 1 was omitted, that the addition amount of the fluorine-containing pyridine compound F9 in the electrolyte accounted for 0.33% of the total mass of the electrolyte.

**Comparative Example 12**

Comparative Example 12 differed from Example 1 in that addition of the fluorine-containing pyridine compound F1 in Example 1 was omitted, that the addition amount of the phosphite compound P1 in the electrolyte accounted for 0.33% of the total mass of the electrolyte.

**Comparative Example 13**

Comparative Example 13 differed from Example 1 in that: the addition of the fluorine-containing pyridine compound F1 in Example 1 was omitted, the phosphite compound P1 in Example 1 was replaced with tris(trimethylsilyl)phosphite

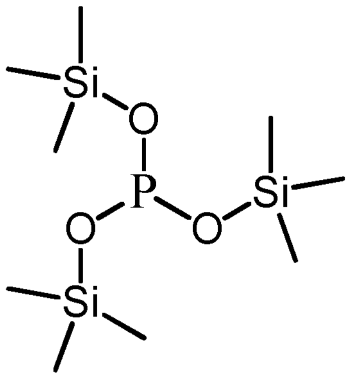

,

and an addition amount of the tris(trimethylsilyl)phosphite in the electrolyte accounted for 0.33% of the total mass of the electrolyte.

The electrolytes of the lithium secondary batteries in Example 1 to Example 12 and Comparative Example 1 to Comparative Example 13 were all used in the soft-packed batteries of corresponding battery system. The cycle performances at high-temperature environment of these soft-packed batteries were tested at 45°C and at 3.0V to 4.2V with a charge and discharge rate of 1C, and the high-temperature storage performance of these soft-packed batteries were tested at 60°C for 30 days. The test methods are described as follows.

Battery high-temperature storage experiment: the batteries obtained in Example 1 to Example 2 and Comparative Example 1 to Comparative Example 13 were subjected to 5 charge and discharge cycle tests at room temperature with a charge and discharge rate of 1C, and they were finally charged to a fully charged state at a rate of 1C. 1C capacity Q and internal resistance T of the batteries were recorded, respectively. The batteries at the fully charged state were stored at 60°C for 30 days. Internal resistance T0 of the batteries and 1C discharge capacity Q1 were recorded. Then the batteries were charged and discharged at room temperature with a rate of 1C for 5 weeks. The highest discharge capacity was selected and recorded as discharge capacity Q2. Experimental data such as high-temperature storage capacity retention rate, capacity recovery rate, and internal resistance change rate of the batteries were obtained by calculation. The recorded results were shown in Table 1.

$$\text{Internal resistance change rate}(\%) = \frac{T - T0}{T} * 100$$

$$\text{Capacity retention rate}(\%) = \frac{Q1}{Q} * 100$$

$$\text{Capacity recovery rate}(\%) = \frac{Q2}{Q} * 100$$

[Table 1] Comparison of experimental results of high-temperature cycle and high-temperature storage of batteries in Examples 1 to 12 and Comparative Examples 1 to 13

| Test object | 45°C high-temperature cycle capacity retention rate% | | 60°C/30 days capacity change | | 60°C/30 days internal resistance change rate% |
|---|---|---|---|---|---|
| | 500 cycles | 1000 cycles | Capacity retention rate % | Capacity recovery rate % | |
| Example 1 | 94.3 | 90.9 | 89.1 | 95.4 | 6.7 |
| Example 2 | 94.6 | 91.2 | 89.4 | 95.8 | 6.2 |
| Example 3 | 94.2 | 91.1 | 89.2 | 95.4 | 6.3 |
| Example 4 | 94.1 | 90.9 | 89.0 | 95.5 | 6.4 |
| Example 5 | 94.7 | 90.8 | 89.3 | 95.6 | 6.3 |
| Example 6 | 94.6 | 91.2 | 89.1 | 95.2 | 6.3 |
| Example 7 | 94.3 | 91.1 | 89.4 | 95.3 | 6.4 |
| Example 8 | 94.5 | 91.0 | 89.2 | 95.4 | 6.6 |
| Example 9 | 94.2 | 91.2 | 89.0 | 95.2 | 6.4 |
| Example 10 | 94.3 | 91.3 | 89.3 | 95.4 | 6.5 |
| Example 11 | 94.6 | 90.9 | 89.1 | 95.3 | 6.4 |
| Example 12 | 93.1 | 88.2 | 87.3 | 93.2 | 7.3 |
| Comparative Example 1 | 90.1 | 84.1 | 79.4 | 85.3 | 14.6 |
| Comparative Example 2 | 92.3 | 88.9 | 86.1 | 93.1 | 7.2 |
| Comparative Example 3 | 93.2 | 89.6 | 87.1 | 93.8 | 6.9 |
| Comparative Example 4 | 92.8 | 89.2 | 86.4 | 93.5 | 7.4 |
| Comparative Example 5 | 92.3 | 89.1 | 86.1 | 93.4 | 7.7 |
| Comparative Example 6 | 92.1 | 88.9 | 85.9 | 92.9 | 7.9 |
| Comparative Example 7 | 92.2 | 89.3 | 86.5 | 93.6 | 7.2 |
| Comparative Example 8 | 91.6 | 88.6 | 86.2 | 93.2 | 7.4 |
| Comparative Example 9 | 91.3 | 88.1 | 85.9 | 93.1 | 7.8 |

(continued)

| Test object | 45°C high-temperature cycle capacity retention rate% | | 60°C/30 days capacity change | | 60°C/30 days internal resistance change rate% |
|---|---|---|---|---|---|
| | 500 cycles | 1000 cycles | Capacity retention rate % | Capacity recovery rate % | |
| Comparative Example 10 | 91.4 | 88.6 | 85.6 | 92.8 | 7.4 |
| Comparative Example 11 | 91.2 | 88.3 | 86.0 | 93.1 | 7.3 |
| Comparative Example 12 | 91.8 | 85.2 | 80.4 | 86.5 | 10.4 |
| Comparative Example 13 | 90.3 | 83.1 | 78.1 | 83.4 | 17.7 |

As can be seen from Table 1, a compounded use of the fluorine-containing pyridine compound and the phosphite compound according to the present disclosure can improve the high-temperature cycle performance and the high-temperature storage performance of the batteries. In addition, when other conditions were the same, the battery, in which 2-fluoropyridine (F1) was used in combination with trimethyl phosphite (P1), triethyl phosphite (P2), or triphenyl phosphite (P6), had better high-temperature cycle performance, high-temperature storage performance, and internal resistance change rate than the battery, in which 2-fluoropyridine (F1) was used in combination with tris(trimethylsilyl)phosphite, indicating that compounded system according to the present disclosure is superior.

2. Investigation of storage of electrolyte containing ethylene sulfate (DTD) was implemented as follows.

**Comparative Example G0 of Basic Electrolyte**

(1) Cyclic carbonate solvent ethylene carbonate (EC) and linear carbonate solvent ethyl methyl carbonate (EMC) were mixed according to a mass ratio of EC:EMC=3:7, and then the mixture was purified and impurities and water were removed using a molecular sieve.

(2) 15% by mass of conductive lithium salt lithium hexafluorophosphate ($LiPF_6$) and 2% by mass of ethylene sulfate (DTD) were dissolved in the solvent obtained in step (1) at room temperature, and the mixture was stirred evenly to obtain a basic electrolyte.

(3) The electrolyte obtained in Comparative Example G0 was stored at 45°C and at room temperature, respectively, and acidity and chromaticity of the electrolyte were tested when stored for 7 days, 15 days, 30 days, and 60 days.

**Comparative Example G1**

Comparative Example G1 differed from Comparative Example G0 of basic electrolyte in that a fluorine-containing pyridine compound, 2-fluoropyridine (F1), was additionally added in step (2) in an amount accounting for 0.3% of the total mass of the electrolyte to obtain an electrolyte of a lithium secondary battery for storage.

**Comparative Example G2**

Comparative Example G2 differed from Comparative Example G0 of basic electrolyte in that a fluorine-containing pyridine compound, 2-fluoro-6-methylpyridine (F2), was additionally added in step (2) in an amount accounting for 0.3% of the total mass of the electrolyte to obtain an electrolyte of a lithium secondary battery for storage.

**Comparative Example G3**

Comparative Example G3 differed from Comparative Example G0 of basic electrolyte in that a fluorine-containing pyridine compound, 6-fluoro-2,3-dimethylpyridine (F3), was additionally added in step (2) in an amount accounting for 0.3% of the total mass of the electrolyte to obtain an electrolyte of a lithium secondary battery for storage.

**Comparative Example G4**

Comparative Example G4 differed from Comparative Example G0 of basic electrolyte in that a fluorine-containing pyridine compound, 6-fluoro-2,3,4-trimethylpyridine (F4), was additionally added in step (2) in an amount accounting for 0.3% of the total mass of the electrolyte to obtain an electrolyte of a lithium secondary battery for storage.

**Comparative Example G5**

Comparative Example G5 differed from Comparative Example G0 of basic electrolyte in that a fluorine-containing pyridine compound, 2-fluoro-3,4,5,6-tetramethylpyridine (F5), was additionally added in step (2) in an amount accounting for 0.3% of the total mass of the electrolyte to obtain an electrolyte of a lithium secondary battery for storage.

**Comparative Example G6**

Comparative Example G6 differed from Comparative Example G0 of basic electrolyte in that a fluorine-containing pyridine compound, 2,6-difluoropyridine (F6), was additionally added in step (2) in an amount accounting for 0.3% of the total mass of the electrolyte to obtain an electrolyte of a lithium secondary battery for storage.

**Comparative Example G7**

Comparative Example G7 differed from Comparative Example G0 of basic electrolyte in that a fluorine-containing pyridine compound, 2,6-difluoro-3-methylpyridine (F7), was additionally added in step (2) in an amount accounting for 0.3% of the total mass of the electrolyte to obtain an electrolyte of a lithium secondary battery for storage.

**Comparative Example G8**

Comparative Example G8 differed from Comparative Example G0 of basic electrolyte in that a fluorine-containing pyridine compound, 2,6-difluoro-3,4-dimethylpyridine (F8), was additionally added in step (2) in an amount accounting for 0.3% of the total mass of the electrolyte to obtain an electrolyte of a lithium secondary battery for storage.

**Comparative Example G9**

Comparative Example G9 differed from Comparative Example G0 of basic electrolyte in that a fluorine-containing pyridine compound, 2,6-difluoro-3,4,5-trimethylpyridine (F9), was additionally added in step (2) in an amount accounting for 0.3% of the total mass of the electrolyte to obtain an electrolyte of a lithium secondary battery for storage.

**Comparative Example G10**

Comparative Example G10 differed from Comparative Example G0 of basic electrolyte in that a phosphite compound, trimethyl phosphite (P1), was additionally added in step (2) in an amount accounting for 0.03% of the total mass of the electrolyte to obtain an electrolyte of a lithium secondary battery for storage.

**Comparative Example G11**

Comparative Example G11 differed from Comparative Example G0 of basic electrolyte in that the phosphite compound tris(trimethylsilyl)phosphite

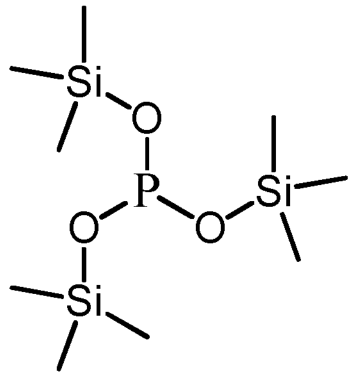

was additionally added in step (2) in an amount accounting for 0.03% of the total mass of the electrolyte to obtain an electrolyte of a lithium secondary battery for storage.

**Comparative Example G12**

Comparative Example G12 differed from Comparative Example G0 of basic electrolyte in that: a fluorine-containing pyridine compound, 2-fluoropyridine (F1), was additionally added in step (2) in an amount accounting for 0.3% of the total mass of the electrolyte, and a phosphite compound, tris(trimethylsilyl)phosphite, was further added in an amount accounting for 0.03% of the total mass of the electrolyte to obtain an electrolyte of a lithium secondary battery for storage.

**Example G13**

Example G13 differed from Comparative Example G0 of basic electrolyte in that: a fluorine-containing pyridine compound, 2-fluoropyridine (F1), was additionally added in step (2) in an amount accounting for 0.3% of the total mass of the electrolyte, and a phosphite compound, trimethyl phosphite (P1), was further added in an amount accounting for 0.03% of the total mass of the electrolyte to obtain an electrolyte of a lithium secondary battery for storage.

**Example G14**

Example G14 differed from Comparative Example G0 of basic electrolyte in that a fluorine-containing pyridine compound, 2-fluoro-6-methylpyridine (F2), was additionally added in step (2) in an amount accounting for 0.3% of the total mass of the electrolyte, and a phosphite compound, trimethyl phosphite (P1), was further added in an amount accounting for 0.03% of the total mass of the electrolyte to obtain an electrolyte of a lithium secondary battery for storage.

**Example G15**

Example G15 differed from Comparative Example G0 of basic electrolyte in that a fluorine-containing pyridine compound, 6-fluoro-2,3-dimethylpyridine (F3), was additionally added in step (2) in an amount accounting for 0.3% of the total mass of the electrolyte, and a phosphite compound, trimethyl phosphite (P1), was further added in an amount accounting for 0.03% of the total mass of the electrolyte to obtain an electrolyte of a lithium secondary battery for storage.

**Example G16**

Example G16 differed from Comparative Example G0 of basic electrolyte in that a fluorine-containing pyridine compound, 6-fluoro-2,3,4-trimethylpyridine (F4), was additionally added in step (2) in an amount accounting for 0.3% of the total mass of the electrolyte, and a phosphite compound, trimethyl phosphite (P1), was further added in an amount accounting for 0.03% of the total mass of the electrolyte to obtain an electrolyte of a lithium secondary battery for storage.

**Example G17**

Example G17 differed from Comparative Example G0 of basic electrolyte in that a fluorine-containing pyridine compound, 2-fluoro-3,4,5,6-tetramethylpyridine (F5), was additionally added in step (2) in an amount accounting for 0.3% of the total mass of the electrolyte, and a phosphite compound, trimethyl phosphite (P1), was further added in an

amount accounting for 0.03% of the total mass of the electrolyte to obtain an electrolyte of a lithium secondary battery for storage.

**Example G18**

Example G18 differed from Comparative Example G0 of basic electrolyte in that a fluorine-containing pyridine compound, 2,6-difluoropyridine (F6), was additionally added in step (2) in an amount accounting for 0.3% of the total mass of the electrolyte, and a phosphite compound, trimethyl phosphite (P1), was further added in an amount accounting for 0.03% of the total mass of the electrolyte to obtain an electrolyte of a lithium secondary battery for storage.

**Example G19**

Example G19 differed from Comparative Example G0 of basic electrolyte in that a fluorine-containing pyridine compound, 2,6-difluoro-3-methylpyridine (F7), was additionally added in step (2) in an amount accounting for 0.3% of the total mass of the electrolyte, and a phosphite compound, trimethyl phosphite (P1), was further added in an amount accounting for 0.03% of the total mass of the electrolyte to obtain an electrolyte of a lithium secondary battery for storage.

**Example G20**

Example G20 differed from Comparative Example G0 of basic electrolyte in that a fluorine-containing pyridine compound, 2,6-difluoro-3,4-dimethylpyridine (F8), was additionally added in step (2) in an amount accounting for 0.3% of the total mass of the electrolyte, and a phosphite compound, trimethyl phosphite (P1), was further added in an amount accounting for 0.03% of the total mass of the electrolyte to obtain an electrolyte of a lithium secondary battery for storage.

**Example G21**

Example G21 differed from Comparative Example G0 of basic electrolyte in that a fluorine-containing pyridine compound, 2,6-difluoro-3,4,5-trimethylpyridine (F9), was additionally added in step (2) in an amount accounting for 0.3% of the total mass of the electrolyte, and a phosphite compound, trimethyl phosphite (P1), was further added in an amount accounting for 0.03% of the total mass of the electrolyte to obtain an electrolyte of a lithium secondary battery for storage.

**Example G22**

Example G22 differed from Comparative Example G0 of basic electrolyte in that a fluorine-containing pyridine compound, 2-fluoropyridine (F1), was additionally added in step (2) in an amount accounting for 0.3% of the total mass of the electrolyte, and a phosphite compound P2 was further added in an amount accounting for 0.03% of the total mass of the electrolyte to obtain an electrolyte of a lithium secondary battery for storage.

**Example G23**

Example G23 differed from Comparative Example G0 of basic electrolyte in that a fluorine-containing pyridine compound, 2-fluoropyridine (F1), was additionally added in step (2) in an amount accounting for 0.3% of the total mass of the electrolyte, and a phosphite compound P6 was further added in an amount accounting for 0.03% of the total mass of the electrolyte to obtain an electrolyte of a lithium secondary battery for storage.

The electrolytes of lithium secondary battery in examples G0 to G23 were all used for storage at room temperature and 45°C, and the acidity and chromaticity of the electrolytes were tested when stored for 7 days, 15 days, 30 days, and 60 days. The acidity was tested by means of an instrument of potentiometric titrator with a method of triethylamine potentiometric titration. The chromaticity was tested with a chromaticity meter. The recorded results of the chromaticity are shown in Table 2, and the recorded results of the acidity are shown in Table 3.

[Table 2] Comparison of experimental results of storage chromaticity of electrolytes of lithium secondary battery in examples G0 to G23

| Test object | Normal temperature storage chromaticity/ Hazen | | | | High-temperature storage chromaticity/ Hazen | | | |
|---|---|---|---|---|---|---|---|---|
| | 7 days | 15 days | 30 days | 60 days | 7 days | 15 days | 30 days | 60 days |
| Comparative Example G0 | 21.3 | 26.3 | 70.8 | 100.2 | 58.1 | 168.4 | 275.6 | 584.1 |
| Comparative Example G1 | 17.5 | 18.9 | 21.2 | 22.4 | 13.9 | 41.9 | 47.1 | 53.6 |
| Comparative Example G2 | 18.2 | 19.2 | 23.1 | 23.2 | 13.5 | 40.4 | 49.0 | 53.3 |
| Comparative Example G3 | 20.2 | 21.2 | 22.5 | 24.8 | 13.5 | 39.9 | 42.3 | 46.5 |
| Comparative Example G4 | 17.8 | 20.9 | 22.2 | 25.4 | 14.9 | 44.9 | 48.1 | 55.6 |
| Comparative Example G5 | 18.5 | 20.9 | 22.6 | 26.4 | 14.2 | 43.6 | 47.6 | 53.9 |
| Comparative Example G6 | 16.8 | 21.2 | 23.1 | 27.0 | 14.1 | 44.1 | 47.4 | 56.1 |
| Comparative Example G7 | 15.8 | 20.0 | 21.2 | 24.4 | 13.9 | 42.3 | 47.8 | 57.6 |
| Comparative Example G8 | 16.2 | 20.3 | 23.0 | 26.4 | 12.7 | 45.9 | 50.4 | 57.3 |
| Comparative Example G9 | 17.8 | 23.6 | 25.7 | 28.1 | 14.6 | 45.7 | 51.8 | 59.7 |
| Comparative Example G10 | 11.2 | 12.2 | 13.1 | 13.2 | 9.5 | 10.4 | 16.0 | 23.3 |
| Comparative Example G11 | 22.3 | 36.5 | 80.7 | 133.6 | 66.4 | 189.3 | 315.6 | 646.3 |
| Comparative Example G12 | 20.2 | 26.1 | 80.4 | 103.3 | 61.1 | 121.2 | 201.3 | 412.6 |
| Example G13 | 10.2 | 11.2 | 12.5 | 12.8 | 9.5 | 9.9 | 12.3 | 16.5 |
| Example G14 | 10.3 | 11.4 | 12.7 | 13.0 | 9.3 | 10.2 | 11.9 | 14.9 |
| Example G15 | 9.9 | 10.2 | 12.3 | 13.2 | 9.4 | 10.6 | 11.6 | 15.1 |
| Example G16 | 10.1 | 10.9 | 12.5 | 13.1 | 9.1 | 10.2 | 11.7 | 13.9 |
| Example G17 | 9.9 | 10.3 | 12.2 | 13.1 | 9.2 | 10.3 | 12.0 | 14.1 |
| Example G18 | 9.8 | 10.5 | 12.0 | 13.3 | 9.2 | 10.6 | 12.1 | 14.7 |
| Example G19 | 10.3 | 10.8 | 12.3 | 13.0 | 9.0 | 10.4 | 11.9 | 15.1 |
| Example G20 | 10.1 | 11.0 | 12.1 | 13.2 | 9.3 | 10.7 | 11.8 | 14.9 |
| Example G21 | 10.2 | 10.7 | 12.2 | 13.1 | 9.4 | 10.6 | 12.4 | 15.2 |
| Example G22 | 10.0 | 10.9 | 12.0 | 13.5 | 9.5 | 10.4 | 12.1 | 14.9 |
| Example G23 | 10.3 | 11.1 | 12.5 | 13.2 | 9.1 | 10.3 | 12.0 | 15.1 |

As can be seen from Table 2, the compounded use of the fluorine-containing pyridine compound and the phosphite compound according to the present disclosure can significantly inhibit the increase in the chromaticity of the electrolyte. In addition, when other conditions were the same, inhibition effect on the chromaticity by adding trimethyl

phosphite (P1), triethyl phosphite (P2), or triphenyl phosphite (P6) was much better than that of tris(trimethylsilyl)phosphite.

[Table 3] Comparison of experimental results of storage acidity of electrolytes of lithium secondary battery in examples G0 to G23

| | Normal temperature storage acidity/ppm | | | | High-temperature storage acidity/ppm | | | |
|---|---|---|---|---|---|---|---|---|
| | 7 days | 15 days | 30 days | 60 days | 7 days | 15 days | 30 days | 60 days |
| Comparative Example G0 | 80.4 | 126.2 | 151.4 | 228.9 | 143.3 | 214.5 | 264.1 | 285.6 |
| Comparative Example G1 | 28.9 | 33.9 | 36.2 | 48.8 | 33.9 | 39.5 | 49.6 | 65.2 |
| Comparative Example G2 | 28.2 | 33.1 | 41.3 | 48.4 | 33.2 | 39.9 | 51.2 | 63.7 |
| Comparative Example G3 | 27.0 | 30.5 | 42.4 | 47.1 | 38.3 | 41.9 | 50.4 | 61.6 |
| Comparative Example G4 | 27.6 | 33.9 | 42.4 | 49.6 | 34.4 | 38.8 | 49.7 | 60.5 |
| Comparative Example G5 | 26.8 | 31.4 | 40.2 | 49.9 | 34.5 | 38.6 | 48.8 | 61.2 |
| Comparative Example G6 | 29.2 | 33.4 | 35.8 | 49.1 | 32.1 | 38.4 | 48.8 | 64.1 |
| Comparative Example G7 | 27.6 | 34.1 | 38.3 | 50.8 | 32.2 | 39.7 | 49.0 | 65.7 |
| Comparative Example G8 | 28.9 | 35.5 | 39.9 | 51.2 | 32.8 | 39.1 | 50.5 | 66.3 |
| Comparative Example G9 | 29.5 | 36.9 | 40.6 | 53.8 | 33.6 | 40.2 | 52.4 | 68.7 |
| Comparative Example G10 | 70.2 | 103.1 | 121.3 | 198.4 | 123.2 | 189.9 | 211.2 | 243.7 |
| Comparative Example G11 | 90.2 | 139.2 | 172.9 | 252.4 | 169.8 | 259.4 | 287.1 | 302.2 |
| Comparative Example G12 | 55.2 | 71.3 | 80.2 | 89.1 | 79.9 | 84.8 | 98.6 | 121.3 |
| Example G13 | 24.2 | 29.2 | 30.4 | 46.7 | 38.7 | 41.6 | 47.4 | 51.2 |
| Example G14 | 23.9 | 29.1 | 30.2 | 47.1 | 37.9 | 41.2 | 48.3 | 50.9 |
| Example G15 | 24.1 | 29.3 | 30.4 | 47.2 | 37.8 | 40.9 | 48.2 | 50.8 |
| Example G16 | 24.0 | 29.6 | 30.5 | 46.8 | 38.1 | 41.1 | 48.1 | 51.0 |
| Example G17 | 23.9 | 29.3 | 30.6 | 46.9 | 38.0 | 41.0 | 48.7 | 51.1 |
| Example G18 | 24.3 | 28.9 | 30.7 | 47.0 | 38.6 | 41.2 | 48.0 | 51.4 |
| Example G19 | 23.8 | 28.8 | 30.6 | 47.1 | 38.9 | 41.6 | 48.3 | 51.3 |
| Example G20 | 23.7 | 29.0 | 30.7 | 47.3 | 37.5 | 41.2 | 48.2 | 50.9 |
| Example G21 | 24.1 | 29.3 | 30.8 | 47.2 | 37.6 | 41.5 | 48.1 | 50.8 |
| Example G22 | 24.0 | 29.1 | 30.6 | 47.1 | 37.9 | 41.0 | 48.3 | 50.8 |
| Example G23 | 24.1 | 29.4 | 30.5 | 47.3 | 37.8 | 41.4 | 48.4 | 51.2 |

As can be seen from Table 3, the compounded use of the fluorine-containing pyridine compound and the

phosphite compound according to the present disclosure can significantly inhibit the increase in the acidity of the electrolyte. In addition, when other conditions are the same, an addition of 0.03wt% of trimethyl phosphite (P1) has a certain inhibition effect on the acidity, but the effect is unsatisfied. In contrast, an addition of 0.03wt% of tris(trimethylsilyl)phosphite promoted the increase in the acidity of the electrolyte, instead of inhibiting the increase in the acidity.

In summary, the combination of the fluorine-containing pyridine compound and the phosphite compound, and particularly, the combination of 2-fluoropyridine and trimethyl phosphite, can effectively inhibit the increase in the acidity and chromaticity of the electrolyte containing ethylene sulfate (DTD). In addition, by applying the combination of the fluorine-containing pyridine compound and the phosphite compound in the electrolyte of the lithium secondary battery, the high-temperature cycle performance and the high-temperature storage performance of lithium secondary battery can be both enhanced. At the same time, a stable SEI layer is formed on the surface of the negative electrode, improving interface properties of the negative electrode/electrolyte. As a result, irreversible capacity of the lithium secondary battery during a first charge and discharge is reduced, and stability of the interface is improved, which are conducive to the improvement of the high-temperature cycle stability and storage performance of the lithium secondary battery.

The respective technical features of the above-mentioned embodiments may be arbitrarily combined. For briefness, not all possible combinations of the respective technical features of the above-mentioned embodiments are described. However, these combinations of the technical features should fall within the scope of the present disclosure as long as they are not contradictory to each other.

The above-mentioned embodiments, as only part of embodiments according to the present disclosure, are described in a more specific and detailed manner, but they shall not be construed as limitations of the scope of the present disclosure. It should be noted that, those of ordinary skill in the art can make modifications and improvements without departing from the concept of the present disclosure, all of which shall fall within the protection scope of the present disclosure. Therefore, the protection scope of the present disclosure should be determined by the appended claims.

## Claims

**1.** An electrolyte additive composition, comprising:

a fluorine-containing pyridine compound having a structure represented by formula (I); and
a phosphite compound having a structure represented by formula (II),

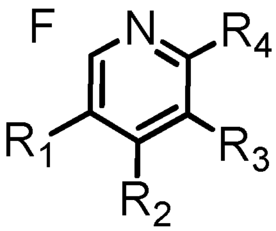 (I), 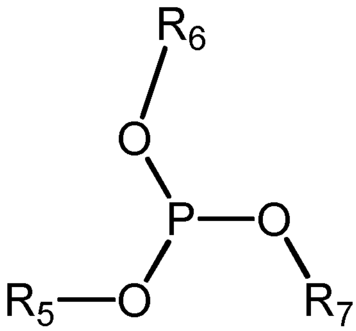 (II),

wherein:

a mass ratio of the fluorine-containing pyridine compound to the phosphite compound being (3 to 10): 1,
$R_1$, $R_2$, $R_3$, and $R_4$ are each independently selected from hydrogen, halogen, $C_1$ to $C_{20}$ alkyl, $C_1$ to $C_{20}$ halogenated alkyl, $C_6$ to $C_{26}$ aryl, $C_6$ to $C_{26}$ halogenated aryl, amino, isocyano, and alkoxy; and
$R_5$, $R_6$, and $R_7$ are each independently selected from $C_1$ to $C_{20}$ alkyl, $C_1$ to $C_{20}$ halogenated alkyl, $C_6$ to $C_{26}$ aryl, and $C_6$ to $C_{26}$ halogenated aryl.

**2.** The electrolyte additive composition according to claim 1, wherein the fluorine-containing pyridine compound has a structure represented by any one of the following formulas (F 1) to (F9):

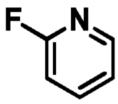 (F1), 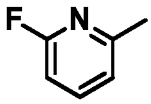 (F2), 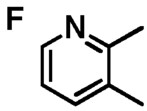 (F3), 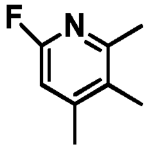 (F4),

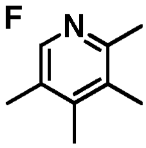 (F5), 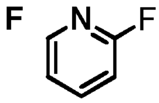 (F6), 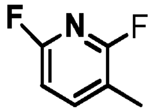 (F7), 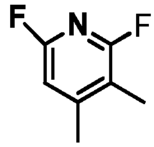 (F8), and 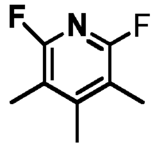 (F9).

3. The electrolyte additive composition according to claim 1, wherein the phosphite compound has a structure represented by any one of the following formulas (P1) to (P9):

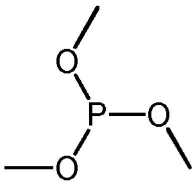 (P1), 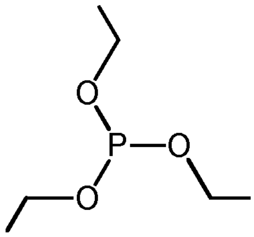 (P2), 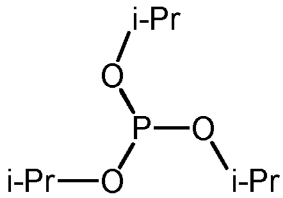 (P3),

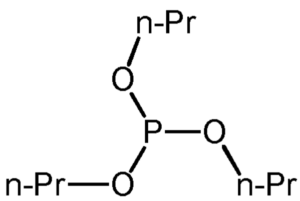 (P4), 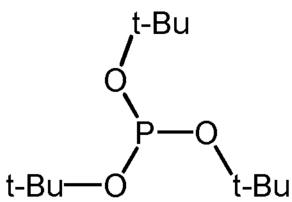 (P5), 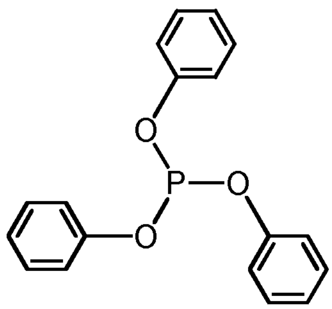 (P6),

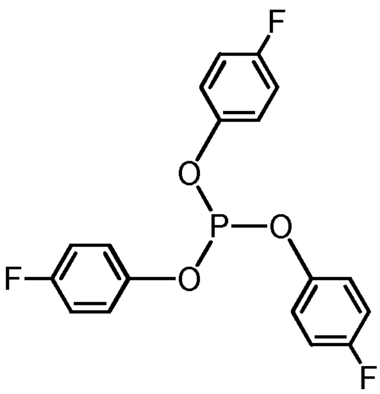 (P7), 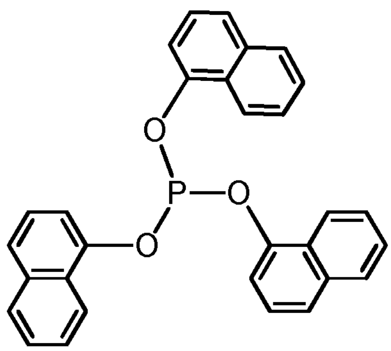 (P8),

and

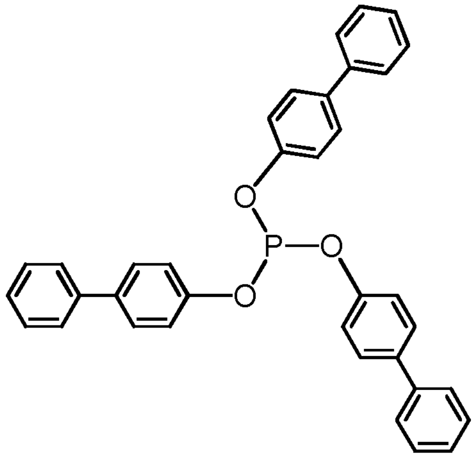

(P9).

4. An electrolyte, comprising the electrolyte additive composition according to any one of claims 1 to 3.

5. The electrolyte according to claim 4, further comprising an electrolyte lithium salt, an organic solvent, and ethylene sulfate.

6. The electrolyte according to claim 5, wherein:

the organic solvent is a mixture of at least two selected from ethylene carbonate, propylene carbonate, diethyl carbonate, ethyl methyl carbonate, ethyl acetate, and propyl acetate; and
the electrolyte lithium salt is selected from at least one of lithium hexafluorophosphate, lithium tetrafluoroborate, lithium bis(oxalate) borate, lithium difluorophosphate, lithium difluoro(oxalato) phosphate, and lithium bis(fluorosulfonyl)imide.

7. The electrolyte according to any one of claims 4 to 6, wherein:

a concentration of the electrolyte lithium salt in the organic solvent ranges from 0.8 mol/L to 1.5 mol/L;
an addition amount of the electrolyte additive composition accounts for 0.05% to 1.5% of a total mass of the electrolyte lithium salt and the organic solvent; and
an addition amount of the ethylene sulfate accounts for 0.5% to 3% of a total mass of the electrolyte.

8. The electrolyte according to claim 7, wherein:

an addition amount of the fluorine-containing pyridine compound having the structure represented by formula (I) accounts for 0.03% to 1% of the total mass of the electrolyte; and
an addition amount of the phosphite compound having the structure represented by formula (II) accounts for 0.01% to 0.1% of the total mass of the electrolyte.

9. The electrolyte according to any one of claims 4 to 6, further comprising a functional additive selected from at least one of tris(trimethylsilyl)phosphate, tris(trimethylsilyl)borate, lithium difluoro(oxalato)borate, ethylene carbonate, vinyl ethylene carbonate, fluoroethylene carbonate, and 1,3-propane sultone; and/or an addition amount of the functional additive accounts for 0.5% to 5% of the total mass of the electrolyte.

10. A lithium secondary battery, comprising the electrolyte additive composition according to any one of claims 1 to 3, or the electrolyte according to any one of claims 4 to 9.

**INTERNATIONAL SEARCH REPORT**

International application No.
**PCT/CN2022/073094**

**A. CLASSIFICATION OF SUBJECT MATTER**

H01M 10/0567(2010.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNPAT, CNKI, WPI, EPODOC: 电解液, 电解质, 氟, 吡啶, 亚磷酸, 酯, electrolyte, fluorine, pyridine, phosphite

**C. DOCUMENTS CONSIDERED TO BE RELEVANT**

| Category* | Citation of document, with indication, where appropriate, of the relevant passages | Relevant to claim No. |
|---|---|---|
| X | CN 111313091 A (NINGDE AMPEREX TECHNOLOGY LTD.) 19 June 2020 (2020-06-19) description, paragraphs 26-129 | 1-10 |
| X | CN 113451646 A (SHENZHEN GRAND POWERSOURCE CO., LTD.) 28 September 2021 (2021-09-28) description, paragraphs 4-14 | 1-10 |
| A | CN 105895954 A (DONGUAN KAIXIN BATTERY MATERIAL CO., LTD.) 24 August 2016 (2016-08-24) entire document | 1-10 |
| A | JP H0714610 A (FUJI PHOTO FILM CO., LTD.) 17 January 1995 (1995-01-17) entire document | 1-10 |

☐ Further documents are listed in the continuation of Box C.  ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **03 August 2022** | **18 August 2022** |

Name and mailing address of the ISA/CN

**China National Intellectual Property Administration (ISA/CN)**
**No. 6, Xitucheng Road, Jimenqiao, Haidian District, Beijing 100088, China**

Facsimile No. **(86-10)62019451**

Authorized officer

Telephone No.

**INTERNATIONAL SEARCH REPORT**
**Information on patent family members**

International application No.
**PCT/CN2022/073094**

| Patent document cited in search report | | | Publication date (day/month/year) | Patent family member(s) | | | Publication date (day/month/year) |
|---|---|---|---|---|---|---|---|
| CN | 111313091 | A | 19 June 2020 | CN | 111313091 | B | 06 August 2021 |
| CN | 113451646 | A | 28 September 2021 | | None | | |
| CN | 105895954 | A | 24 August 2016 | | None | | |
| JP | H0714610 | A | 17 January 1995 | | None | | |

Form PCT/ISA/210 (patent family annex) (January 2015)